# DEMANDE DE BREVET EUROPEEN

(11) **EP 0 806 648 A1**
(43) Date de publication de la demande: **12.11.1997**
(21) Numéro de dépôt: 97420069.3
(22) Date de dépôt: 29.04.1997
(51) Int. Cl.: G01N 1/20, F16K 5/06

(54) **Dipositif de prise d'échantillon sur une canalisation**

(30) Priorité: 10.05.1996 FR 9606175
(71) Demandeur: H + Valves, 69380 Chessy les Mines (FR)
(72) Inventeur: Maurin, Yves, 69005 Lyon (FR); Debelle-Duplan, Patrick, 69006 Lyon (FR); de Castelbajac, Charles, 69130 Ecully (FR)
(74) Mandataire: Vuillermoz, Bruno

(57) **Abrégé**

Ce dispositif comprend :
- un corps en ligne (1), susceptible d'être positionné dans l'alignement de la canalisation au niveau de laquelle doit être prélevé l'échantillon, et d'être fixé à celle-ci au moyen de brides (2) vissées, le diamètre interne du corps étant identique au diamètre interne de ladite canalisation, le corps présentant une ouverture latérale (5) ;
- un robinet de type à tournant sphérique, débouchant au niveau du corps en ligne (1) par le biais de l'ouverture (5) constituant l'une des deux parties du corps constituant ledit robinet, dont l'autre partie (6) constitutive est boulonnée à la première après mise en place d'un joint annulaire (9), la sphère (11) constitutive du boisseau étant évidée, définissant ainsi un volume calibré (12), accessible par une seule entrée (13) ménagée à la périphérie de ladite sphère (11), et susceptible de communiquer par l'intermédiaire de ladite entrée (13) d'une part avec le corps en ligne (1) au niveau de l'ouverture latérale (5), et d'autre part avec un récipient (21), solidarisé amoviblement à la seconde partie (6) constitutive du corps, et destiné à recueillir le volume calibré de fluide.

## Description

L'invention concerne un nouveau dispositif de prise d'échantillon, notamment fluide et plus particulièrement liquide sur une canalisation.

Lors de nombreux procédés de fabrication ou de synthèse dans différentes industries, notamment la chimie, la pétrochimie, la pharmacie, l'agro-alimentaire, il s'avère nécessaire de procéder à un ou plusieurs contrôles de la qualité du produit en cours de fabrication ou d'élaboration lors des différentes étapes du procédé en cause et ce, afin notamment d'aboutir à un produit répondant aux normes qualitatives requises, et ainsi d'éviter les rebuts en influant, en fonction des analyses effectuées, sur les paramètres et les conditions mis en oeuvre lors dudit procédé.

Pour ce faire, il est généralement installé au niveau des canalisations de transfert des produits des robinets classiques permettant manuellement de collecter lesdits produits afin de procéder à leur analyse. Outre le fait qu'avec un tel robinet, l'opérateur entre en contact direct avec le fluide à analyser ou ses émanations, qui peuvent être toxiques, la quantité de liquide prélevé est totalement aléatoire, et de plus, l'étanchéité de ce type de robinet est souvent insuffisante pour un grand nombre d'applications.

Il existe des systèmes de prélèvement d'échantillons à clapet ou pointeau, montés sur une dérivation par rapport à la canalisation principale, qui permettent alors le remplissage d'un flacon. L'organe d'étanchéité du robinet est constitué d'un clapet, d'un pointeau ou d'un cylindre ; l'ouverture s'effectue soit directement dans la veine fluide, soit dans le corps du robinet, par l'intermédiaire d'un volant qui dégage l'organe d'étanchéité de son siège, et laisse écouler le liquide dans le flacon.

Ce système présente certains inconvénients. Il est en effet nécessaire d'avoir une bonne étanchéité au passage de la tige de commande (presse-étoupe) et du siège. Or cette étanchéité est relativement difficile à obtenir avec des fluides agressifs chimiquement et/ou chargés. En outre, elle s'altère de plus en plus au fur et à mesure de l'augmentation du nombre de manoeuvres. Enfin, le flacon est soumis à la même pression que celle de la conduite principale.

Enfin, il est également proposé un dispositif mettant en oeuvre un système d'aiguilles, constitué d'une vanne, d'une fixation d'aiguilles et d'une manchette de protection. Deux aiguilles assurent, l'une le prélèvement, et l'autre l'échappement. Un tel système est monté sur la conduite par les raccordements de la vanne. Cependant, si ce dispositif permet un prélèvement d'une quantité déterminée de produit à analyser, en revanche, ledit produit ne peut être qu'excessivement propre et de très faible viscosité, compte tenu de la mise en oeuvre d'aiguilles, dont l'orifice d'écoulement est très étroit, réduisant de fait drastiquement ses applications. De plus, il est nécessaire d'utiliser un flacon pourvu d'un diaphragme adapté à chaque produit, pour garantir une bonne étanchéité.

La présente invention propose un dispositif de prélèvement d'échantillon sur une canalisation qui soit à la fois fiable, simple à mettre en oeuvre, qui permette de prélever des quantités calibrées du produit. Afin de conférer à l'installation générale au niveau de laquelle il est mis en place, ce dispositif est conçu selon le type "sécurité feu".

Ce dispositif comprend :
- un corps en ligne, susceptible d'être installé sur la canalisation dans laquelle doit être prélevé l'échantillon de produit, et d'être fixé à celle-ci au moyen de brides normalisées (vissées ou monobloc), le diamètre interne du corps étant identique au diamètre interne de ladite canalisation, le corps présentant en outre une ouverture latérale, permettant la fixation d'un robinet à tournant sphérique ;
- un robinet de type à tournant sphérique, débouchant au niveau du corps en ligne par le biais de ladite ouverture latérale, constituant l'une des deux parties du corps constituant le robinet, dont l'autre partie est solidarisée à la première après mise en place d'un joint annulaire, ledit robinet comprenant une sphère évidée munie d'un trou borgne, accessible par une seule entrée, définissant ainsi un volume calibré, ladite sphère étant susceptible de pivoter de 180 degrés entre deux joints annulaires, respectivement positionnés à la jonction entre le corps en ligne et la partie amont du robinet à tournant sphérique, et au sein du corps dudit robinet à tournant sphérique, ladite sphère étant ainsi susceptible de communiquer d'une part avec le corps en ligne, au niveau de l'ouverture latérale, et d'autre part avec la partie aval du robinet, ladite partie aval comportant un canal d'écoulement vers un flacon rapporté de manière amovible sur le corps du robinet, chacune des deux parties recevant un siège de forme sensiblement annulaire, destinés à assurer l'étanchéité du robinet vis à vis de la canalisation au niveau de laquelle est effectué le prélèvement, le profil interne de la seconde partie présentant un épaulement destiné à recevoir l'un des deux sièges, dont le diamètre est inférieur au diamètre externe de la sphère, de sorte qu'en cas de destruction des sièges, un contact métal/métal ou céramique/métal est assuré afin de conférer à l'ensemble une étanchéité.

En d'autres termes, l'invention consiste à mettre en place outre un robinet à tournant sphérique, dont la sphère est évidée mais borgne, de telle sorte à définir un volume calibré, également des siège de forme appropriée et des éléments constitutifs du corps du robinet réalisés de façon telle, qu'en cas de feu susceptible d'entraîner la destruction desdits sièges, il se crée un contact intime entre la sphère et lesdits éléments, suffisant pour assurer l'étanchéité au feu au niveau du reste de l'installation, en d'autres termes de conférer la "sécurité - feu", ainsi que cela apparaîtra par ailleurs plus en détail ultérieurement, ce qu'il n'était pas possible d'obtenir avec les dispositifs disponibles jusqu'alors.

Selon l'invention, le corps du robinet à tournant sphérique reçoit deux inserts complémentaires en forme de couronne annulaire, destinés à remplir la cavité du corps autour de la sphère et réduire ainsi au maximum la possibilité d'introduction du fluide autour de ladite sphère, lors de la manoeuvre d'échantillonnage.

Les sièges, les inserts et le joint annulaire mentionnés précédemment, sont généralement réalisés en polytétrafluoroéthylène - PTFE (TEFLON - marque déposée). Cependant, d'autres matériaux peuvent être utilisés en fonction du fluide à échantillonner.

Selon l'invention, le levier de manoeuvre du robinet est solidaire d'une tige. Celle-ci est épaulée et montée par l'intérieur du corps du robinet, afin d'éviter son éjection accidentelle.

Le flacon de collecte des prélèvements est généralement vissé à un embout d'adaptation du flacon, lui-même solidarisé au corps du robinet à tournant sphérique, recevant en outre une bague de collecte. L'ensemble étant ainsi positionné de manière opposée par rapport à l'ouverture communiquant avec l'intérieur du corps en ligne.

Le flacon peut être solidarisé au corps du robinet par filetage ou tout autre moyen d'accouplement rapide, tel que raccord à cames, à brides, ou un système bien connu sous l'expression en langue anglaise "clamps".

La manière dont l'invention peut être réalisée et les avantages qui en découlent, ressortiront mieux de l'exemple de réalisation qui suit donné à titre indicatif mais non limitatif, à l'appui des figures annexées.

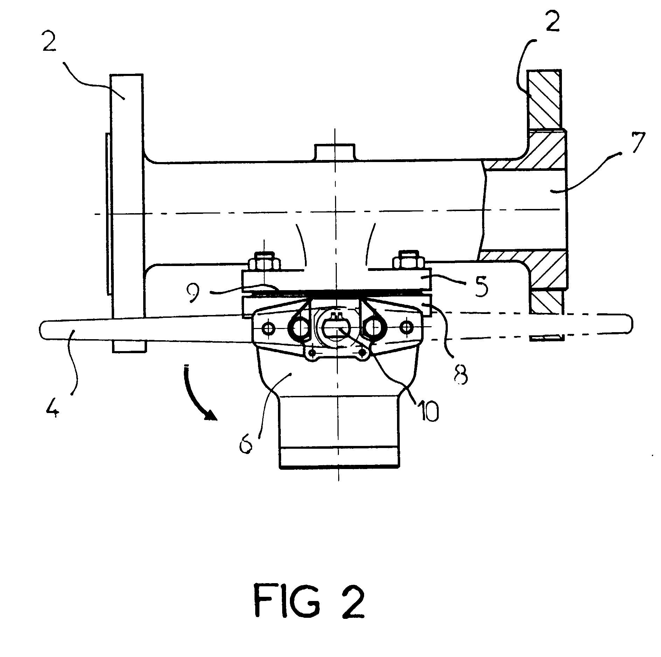

La figure 1 est une représentation schématique en perspective du dispositif conforme à l'invention, dont la figure 2 est une vue de dessus.

La figure 3 est une représentation schématique en section transversale du dispositif conforme à l'invention.

La figure 4 est une vue de détail du mode de fixation de la tige d'actionnement de la sphère.

La figure 5 est une représentation schématique en éclaté du dispositif conforme à l'invention.

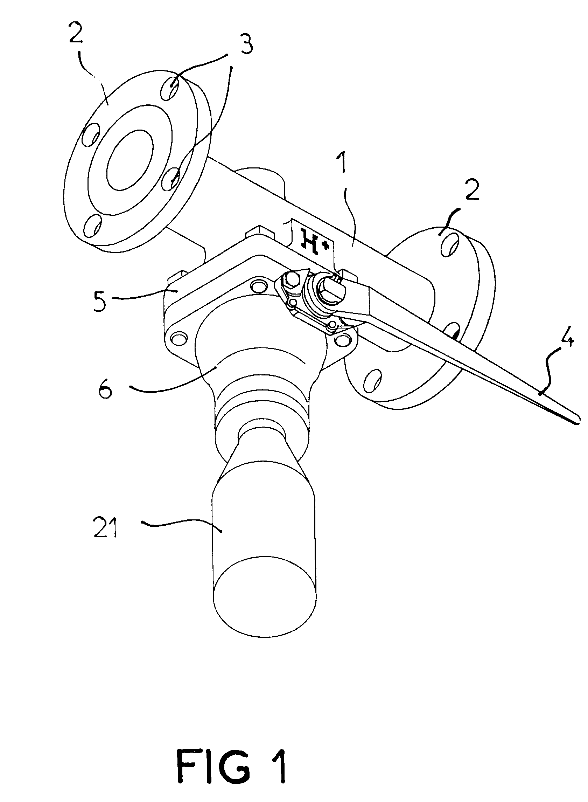

On a représenté sur la figure 1 une vue schématique en perspective du dispositif de prise d'échantillon conforme à l'invention. Ce dispositif est tout d'abord constitué d'un corps en ligne (1), typiquement constitué d'un morceau de canalisation, susceptible d'être fixé à une telle canalisation au moyen de brides (2) percées d'orifices traversants (3) afin de permettre le boulonnage. Le diamètre de la canalisation interne (7) que définit le corps en ligne (1), est identique à celui de la canalisation à laquelle il est relié.

Ce corps en ligne (1) comporte une ouverture, faisant communiquer l'intérieur de la canalisation (7) avec l'extérieur, au niveau d'une zone de fixation (5) sensiblement ménagée au milieu dudit corps, et destinée à constituer la première partie du corps d'un robinet décrit en détail ci-après. L'ensemble corps en ligne (1)/ zone de fixation (5) est directement issu de fonderie et donc constitue une pièce monobloc.

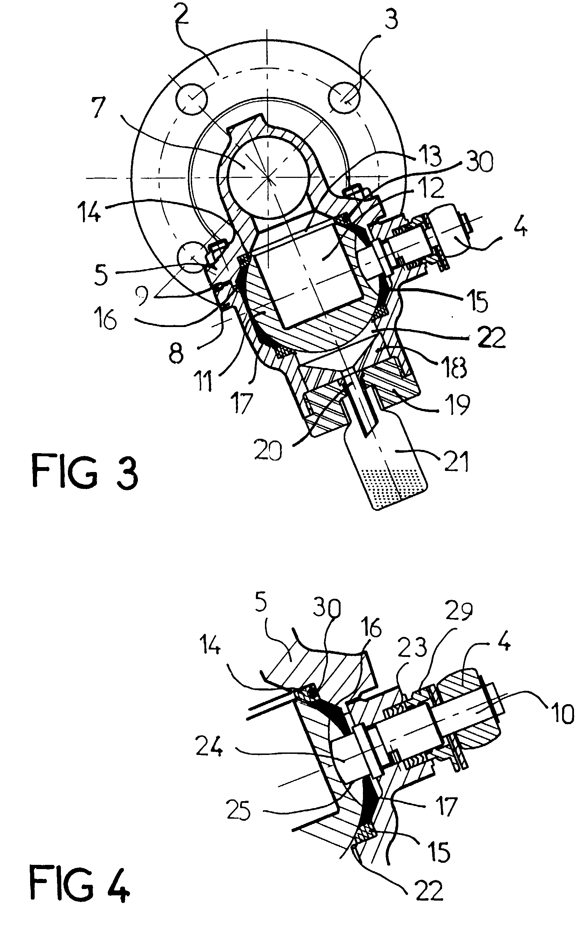

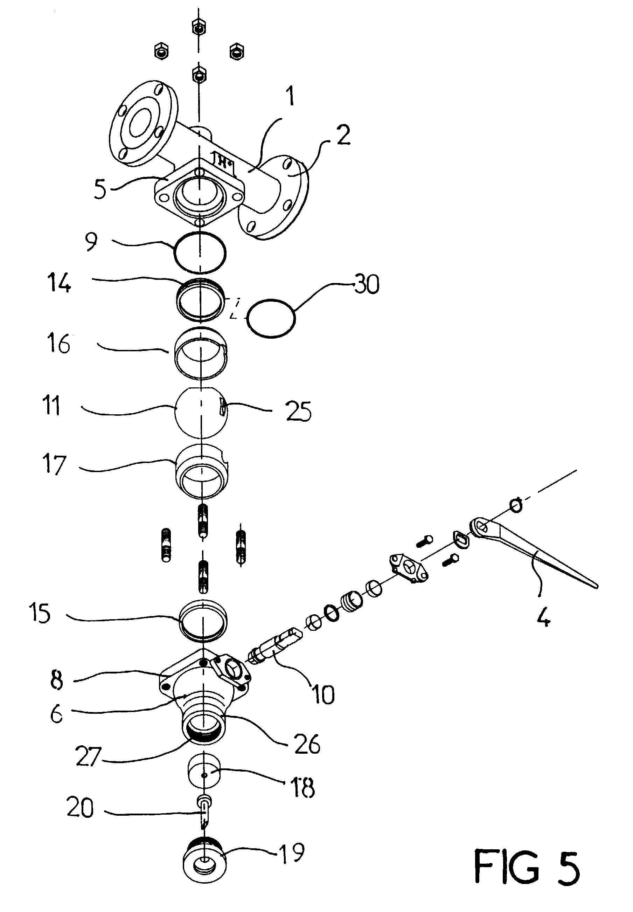

A cette pièce de fixation (5), est destinée à venir se fixer une pièce complémentaire (6) par l'intermédiaire d'une bride de fixation (8), ladite pièce (6) constituant de fait la seconde partie du corps du robinet en question. Préalablement, à la mise en place de cette seconde partie sur la partie de fixation (5), on intercale un joint annulaire en polytétrafluoroéthylène (PTFE) (9), tel qu'on peut mieux l'observer sur la figure 3 ou la figure 5. De manière connue, ce joint est destiné à conférer l'étanchéité à cette zone de jonction. Le joint (9) peut cependant être réalisé en un autre matériau, tel que par exemple en graphite pour un ensemble de type "sécurité-feu".

Le robinet associé à ce corps en ligne est un robinet du type à tournant sphérique, dont la sphère (11), manoeuvrée par l'intermédiaire d'un levier (4) et d'une tige (10), est évidée afin de définir un volume interne (12) calibré, ladite sphère (11) étant ouverte au niveau de sa périphérie afin de définir une entrée (13) susceptible de venir en regard de l'ouverture pratiquée au niveau de la zone de jonction (5), c'est-à-dire au regard de la canalisation (7). Cette sphère peut être réalisée en tout matériau, notamment en céramique frittée ou en métal. Elle est susceptible d'opérer une rotation sur elle-même de 180° sous l'effet combiné de la tige (10) et du levier (4), afin de permettre la mise en communication du contenu du volume (12) qu'elle définit avec un dispositif de collecte (18,19,20) et un flacon de récupération (21), tel qu'il sera décrit plus en détail ultérieurement.

La sphère (11) est parfaitement guidée au sein du corps (5, 6) de par la présence d'une part de sièges annulaires (14) et (15) rapportés respectivement au niveau de la première partie (5) et seconde partie (6) du corps du robinet, en positions sensiblement diamétrales, et également par la mise en place d'inserts (16) et (17), en forme de secteurs de couronne, également reçus au niveau des deux parties constitutives du corps, permettant en outre de limiter la zone morte comprise entre la sphère (11) et le corps du robinet à tournant sphérique.

Les sièges et autres inserts sont généralement réalisés en PTFE. Cependant, d'autres matériaux peuvent être utilisés selon la nature du fluide s'écoulant dans la canalisation (7).

Selon l'invention, le siège aval (15) est reçu au niveau d'un épaulement (22) issu de fonderie ou d'usinage, ménagé au sein de la seconde partie (6) constitutive du corps. Ainsi qu'on peut bien l'observer sur la figure 3, cet épaulement est de diamètre inférieur au diamètre externe de la sphère (11), et est susceptible d'entrer en contact avec ladite sphère (11) en cas de détérioration du siège (15), notamment en cas de destruction par le feu. On aboutit ainsi à un contact métal/métal ou métal/céramique si la sphère (11) est réalisée en céramique, présentant une certaine étanchéité compte tenu de la pression exercée en tout état de cause sur la sphère par le fluide circulant dans la canalisation (7), cette pression s'exerçant en direction du récipient (21). De la sorte, on aboutit à un dispositif de prélèvement d'échantillon dit "sécurité - feu".

Le siège amont (14) peut être du type piston. Il comporte une gorge destinée à recevoir un joint torique (30) en élastomère résistant aux fluides à prélever. L'ensemble ainsi réalisé constitue un piston qui est appuyé en permanence contre la sphère (11) par la pression du fluide.

Ce système permet ainsi de réduire notablement le couple de manoeuvre en diminuant très sensiblement les forces de frottement de la sphère (11) sur le siège amont (14), tout en assurant l'étanchéité totale entre les sièges (14) et (15) et la sphère (11) pendant toute la durée de la manoeuvre de prélèvement des échantillons (rotation de la sphère de 180 degrés).

Selon l'invention, le dispositif comporte un réceptacle de collecte du liquide ainsi prélevé. Ce réceptacle ou flacon (21) est fixé de manière amovible sur un embout d'adaptation (19) présentant un taraudage correspondant au filetage externe ménagé sur le col dudit réceptacle (21). Ce même embout d'adaptation (19) assure le serrage d'un tube de sortie (20), et d'une bague de collecte (18), l'ensemble étant maintenu au niveau de la seconde partie (6) constitutive du corps du robinet par vissage dudit embout d'adaptation sur un filetage interne (27) ménagé à cet effet sur la partie (26) que comporte cette dite seconde partie ainsi qu'on peut bien l'observer sur la figure 5.

Afin de conférer une certaine résistance mécanique tant à la bague de collecte (18) qu'à l'embout d'adaptation (19), ceux-ci sont généralement réalisés en PTFE chargé en fibres de verre. D'autres matériaux peuvent être utilisés selon la nature du fluide à prélever.

Selon une autre caractéristique de l'invention, l'étanchéité, et plus particulièrement le système "sécurité - feu" développé par le dispositif est également conférée au niveau de la tige (10) et du levier (4) actionnant la sphère (11). Ainsi qu'on peut l'observer sur les figures 3 et 4, cette tige (10) entraîne la sphère (11) au moyen d'une rainure (25) ménagée sur sa périphérie, au moyen d'un tenon (24) venant se loger dans ladite rainure, ladite tige étant montée au niveau de la partie (6) constitutive du corps du robinet avec une garniture d'étanchéité, constituée d'un empilage de plusieurs bagues (23) usinées en forme de chevrons, permettant ainsi une déformation de la garniture, par serrage du presse-étoupe (29). Cette garniture est généralement réalisée en PTFE. Dans le cas de robinet "sécurité-feu", la garniture (23) est constituée de bagues réalisées en graphite ainsi que le joint entre les deux parties du corps (9).

Compte tenu de la structure du dispositif conforme à l'invention, on conçoit les avantages qu'il procure. Parmi ceux-ci, on peut tout d'abord citer la possibilité de disposer à volonté d'un volume calibré de fluide. Pour ce faire, une fois le prélèvement effectué, il suffit de dévisser le flacon (21) hors de l'embout (19) et de procéder à l'analyse de son contenu, et ce, en l'absence de tout contact avec l'opérateur.

Par ailleurs, de par le positionnement des sièges et autres inserts assurant une rotation déterminée de la sphère du robinet à tournant sphérique, on confère à l'ensemble une étanchéité totale vis à vis de l'extérieur pendant toute la durée de la manoeuvre, ce qui s'avère indispensable dans tous les procédés, notamment dans l'industrie chimique, et pétrochimique.

## Revendications

1. Dispositif pour assurer la prise d'échantillons de fluide sur une canalisation comprenant:
- un corps en ligne (1), susceptible d'être positionné dans l'alignement de la canalisation au niveau de laquelle doit être prélevé l'échantillon, et d'être fixé à celle-ci au moyen de brides (2) vissées ou intégrées, le diamètre interne du corps étant identique au diamètre interne de ladite canalisation, le corps présentant une ouverture latérale (5) ;
- un robinet de type à tournant sphérique, débouchant au niveau du corps en ligne (1) par le biais de l'ouverture (5) constituant l'une des deux parties du corps constituant ledit robinet, dont l'autre partie (6) constitutive est boulonnée à la première après mise en place d'un joint annulaire (9), la sphère (11) constitutive du boisseau étant évidée, définissant ainsi un volume calibré (12), accessible par une seule entrée (13) ménagée à la périphérie de ladite sphère (11), et susceptible de communiquer par l'intermédiaire de ladite entrée (13) d'une part avec le corps en ligne (1) au niveau de l'ouverture latérale (5), et d'autre part avec un récipient (21), solidarisé amoviblement à la seconde partie (6) constitutive du corps, et destiné à recueillir le volume calibré de fluide, chacune des deux parties (5, 6) recevant un siège (14, 15) de forme sensiblement annulaire, destinés à assurer l'étanchéité du robinet vis à vis de la canalisation au niveau de laquelle est effectué le prélèvement, le profil interne de la seconde partie (6) présentant un épaulement (22) destiné à recevoir l'un (15) des deux sièges, dont le diamètre est inférieur au diamètre externe de la sphère (11), de sorte qu'en cas de destruction des sièges, un contact métal/métal ou céramique/métal est assuré afin de conférer à l'ensemble une étanchéité.

2. Dispositif pour assurer la prise d'échantillons de fluide sur une canalisation selon la revendication 1, ***caractérisé*** en ce que le siège amont (14) est du type piston, et comporte une gorge destinée à recevoir un joint torique (30) en élastomère résistant aux fluides à prélever, ledit siège s'appuyant en permanence contre la sphère (11) sous l'effet de la pression du fluide.

3. Dispositif pour assurer la prise d'échantillons de fluide sur une canalisation selon l'une des revendications 1 et 2, ***caractérisé*** en ce que la seconde partie (6) constitutive du corps du robinet reçoit deux inserts complémentaires (16, 17) en forme de couronne annulaire, montés autour de la sphère (11) de telle sorte à minimiser la zone morte au sein du robinet en évitant au maximum l'introduction du fluide dans le robinet autour de ladite sphère.

4. Dispositif pour assurer la prise d'échantillons de fluide sur une canalisation selon l'une des revendications 1 à 3, ***caractérisé*** en ce que les sièges (14, 15), les inserts (16, 17) et le joint annulaire (9) sont réalisés en polytétrafluoroéthylène-PTFE.

5. Dispositif pour assurer la prise d'échantillons de fluide sur une canalisation selon l'une des revendications 1 à 4, ***caractérisé*** en ce que le levier d'actionnement (4) du robinet est solidaire d'une tige (10), boulonnée au corps par l'intermédiaire d'une garniture d'étanchéité munie d'un système de rattrapage de l'étanchéité assurée par une garniture déformable (23) constituée d'un empilage de bagues usinées en forme de chevrons et compressées sur la tige (10) et dans le logement au moyen d'une bride du presse-étoupe (29).

6. Dispositif pour assurer la prise d'échantillons de fluide sur une canalisation selon l'une des revendications 1 à 5, ***caractérisé*** en ce que le flacon de collecte (21) des prélèvements est vissé au sein d'un embout d'adaptation (19) du flacon, lui-même solidarisé à la seconde partie (6) constitutive du corps du robinet, celle-ci recevant en outre une bague de collecte (18), l'ensemble (18, 19, 21) étant ainsi positionné de manière opposée par rapport à l'ouverture communiquant avec l'intérieur du corps en ligne (1).
